Europäisches Patentamt

European Patent Office

Office européen des brevets

(19)

(11) **EP 0 730 899 A1**

## (12) DEMANDE DE BREVET EUROPEEN

(43) Date de publication:
**11.09.1996 Bulletin 1996/37**

(51) Int. Cl.$^6$: **B01D 53/48**, B01D 53/50,
B01D 53/52

(21) Numéro de dépôt: 95400479.2

(22) Date de dépôt: **06.03.1995**

(84) Etats contractants désignés:
**AT BE CH DE DK ES GB GR IE IT LI LU MC NL PT SE**

(71) Demandeur: **David, Philippe-Marie**
**F-27150 Le Thil en Vexin (FR)**

(72) Inventeur: **David, Philippe-Marie**
**F-27150 Le Thil en Vexin (FR)**

(74) Mandataire: **Orès, Bernard et al**
**Cabinet ORES**
**6, Avenue de Messine**
**75008 Paris (FR)**

(54) **Procédé d'épuration d'effluents gazeux ou liquides contenant des dérivés soufrés**

(57) Procédé d'épuration d'effluents gazeux ou liquides contenant des dérivés soufrés ($H_2S$, alcoylmercaptans, $SO_2$).

Ce procédé comprend :

(i) l'alcalinisation de l'effluent à traiter à un pH > 9 en présence d'une base de formule générale M-OH, dans laquelle M représente un métal alcalin, un métal alcalino-terreux, un agent de condensation entre la partie organique du composé de formule I ci-après et le dérivé soufré ou un agent de transfert de phase et notamment un ammonium quaternaire ou un ligand ;
(ii) la mise en contact du produit obtenu en (i) avec un composé de formule générale I : $X\text{-}(CH_2)_n\text{-}CO\text{-}R$, dans laquelle : **X** représente : . un halogène, . un halogénure de sulfonyle de formule $X'\text{-}SO_2\text{-}R'$, dans laquelle X' représente un halogène, et R' représente un groupe alkyle en $C_1\text{-}C_{20}$ ou un groupe aryle éventuellement substitué, . un groupe OH ; **R** représente : . un alcoxy en $C_1\text{-}C_{16}$, . un groupe NH-R", dans lequel R" représente un atome d'hydrogène ou un radical aminique primaire ou secondaire, . un groupe $OR_2$ dans lequel $R_2$ représente un atome d'hydrogène, un métal alcalin, un métal alcalino-terreux ou un groupe ammonium, ou . un halogène ; **n** est un nombre compris entre 1 et 4, à une température comprise entre 12°C et 95°C et à pression atmosphérique.

EP 0 730 899 A1

**Description**

La présente invention est relative à un procédé d'épuration d'effluents gazeux ou liquides contenant des dérivés soufrés ($H_2S$, alcoylmercaptans, $SO_2$).

L'hydrogène sulfuré est un gaz extrêmement toxique, malodorant même lorsqu'il est présent en quantités très faibles, et corrosif.

Sa présence ainsi que celle des alcoylmercaptans qui présentent les mêmes inconvénients que l'$H_2S$ du point olfactif dans les effluents (gazeux ou liquides), industriels en particulier, représentent un danger considérable pour la santé des organismes vivants ou de l'environnement végétal. Il est donc de la plus grande importance dans la lutte contre la pollution, d'éliminer l'hydrogène sulfuré ainsi que les alcoylmercaptans présents dans les effluents industriels (industries liées à l'énergie, chimie, industrie du bois, du papier et de la viscose, industries de l'agro-alimentaire), dans les déchets (industries des sous-produits d'animaux, déjections animales, déchets ménagers) ou dans les stations d'épuration.

La présence du $SO_2$ dans les effluents, industriels en particulier, représente également un danger considérable pour l'environnement végétal ; en effet, son émission est responsable d'une augmentation d'acidité dans l'atmosphère et génère les pluies acides.

Les industries productrices de $SO_2$ sont notamment les raffineries, les industries de traitement des déchets des hydrocarbures, les industries liées à l'énergie, les industries chimiques (chimie minérale : production d'acide sulfurique et d'oxyde de titane ; chimie organique), les industries du papier, les industries agro-alimentaires et les industries des matériaux.

Diverses solutions ont été proposées pour éliminer ces différents composés soufrés des effluents (gazeux ou liquides) :

A. $H_2S$ et/ou alcoylmercaptans :

Les solutions actuellement adoptées dans l'industrie se rangent dans les catégories suivantes :

- l'incinération des gaz polluants (combustion thermique dans des fours ou combustion catalytique). Cette solution présente de nombreux inconvénients :

    . on produit du gaz sulfureux,
    . la nuisance olfactive n'est pas totalement détruite,
    . le coût énergétique est très élevé,
    . la combustion par torchère (pétrochimie) nécessite, en outre, un système de neutralisation par précipitation au chélate de fer ;

- l'adsorption des mercaptans ou de l'$H_2S$ par transfert du produit à éliminer de la phase gazeuse vers une phase solide (charbon actif, éventuellement imprégné d'aldéhyde) ; ce procédé est dangereux (forts échauffements et risques d'incendie) et ne permet pas de recycler le charbon saturé ;
- la biodésodorisation est réalisée :

    . soit par biolavage, dans lequel l'$H_2S$ ou les mercaptans sont extraits avec de l'eau, comprenant des microorganismes épurateurs,
    . soit par biofiltration, dans laquelle les microorganismes sont présents sur le matériau qui est traversé par le gaz à épurer.

    Ce procédé a l'inconvénient de conduire à des coproduits de métabolisation et à une production de biomasse et nécessite des installations de volume important (maintenance complexe) ;
- le lavage des gaz polluants par différentes solutions :

    . solutions de soude ou d'amine : ce processus d'épuration présente l'inconvénient de nécessiter une consommation énergétique élevée en raison de l'efficacité limitée du transfert de matière et de l'obligation de régénérer les solutions de soude ou d'amine ; en outre, on récupère des gaz acides, que l'on brûle, d'où émission de gaz sulfureux,
    . solutions comprenant un oxydant (oxydation de l'$H_2S$ ou des mercaptans en présence de chlore, eau oxygénée, ozone ou ions ferriques notamment) :

        * chlore et ses dérivés :

Le chlore peut être employé soit sous forme de chlore gazeux ou naissant, soit sous forme d'hypochlorite ou de chlorite de sodium.

On aboutit soit à la formation d'acide hypochloreux : HClO, soit à la formation de bioxyde de chlore : $ClO_2$.

Il est à noter que le chlorite de sodium peut générer, selon le pH de travail, des émanations gazeuses très irritantes et suffocantes de bioxyde de chlore présentant, en outre, des dangers d'incendies.

Le chlore naissant peut être formé par électro-chloration d'une solution d'hypochlorite ou de saumure de chlorure de sodium.

Les réactions qui sont citées dans la littérature transforment l'$H_2S$ soit en soufre colloïdal, soit en sulfates :

$$HS{-} + ClO^- \text{ --- } S + OH^- + Cl^-$$

$$S^{2-} + 4\ ClO \text{ --- } SO_4^{2-} + 4\ Cl^-$$

WALTRIP F. (J.W.P.C.F., 1985, 57, (10), 1027-1032) indique que la première réaction se produit en dessous de pH 10 alors que CADENA F. et PETERS R.W., J.W.P.C.F., 1988, 60, (7), 1259-1263) mettent la frontière à pH 7,5. Des travaux récents de BONNIN C. montrent que les deux réactions se superposent, la deuxième étant favorisée par l'augmentation du pH.

Pour arriver au stade de sulfate, la consommation théorique de chlore est de 4 moles de $Cl_2$ par mole d'$H_2S$. En pratique pour obtenir un rendement d'élimination supérieur à 99,8 % et une transformation quasi-totale en sulfate, la consommation de chlore est de 5,2 moles par mole d'$H_2S$ détruit et une consommation de soude d'environ 5 moles/mole.

L'action du chlore sur le méthyl mercaptan est plus complexe. Le premier produit d'oxydation est le diméthyldisulfure ($CH_3$-S-S-$CH_3$), lui-même très odorant qui doit subir une oxydation ultime jusqu'à l'acide méthyl sulfonique ($CH_3$-$SO_3H$). Pour éliminer ce type de composé soufré, l'emploi d'un excès d'oxydant est nécessaire. Les rendements d'élimination sont de l'ordre de 85 à 95 % en utilisant le chlore en excès à pH>10. Les consommations de chlore et de soude sont élevées (respectivement 8,5 et 7,6 moles/mole de $CH_3SH$ éliminé).

* ozone :

Lors de son emploi par lavage et oxydation, il est nécessaire de le transférer à la phase liquide, soit par un hydro-injecteur dans le liquide avant l'opération de lavage, soit au cours d'une deuxième étape dans laquelle il oxydera le mercaptan ou l'$H_2S$ absorbé.

En milieu aqueux, l'$H_2S$ est oxydé par l'ozone principalement sous forme de sulfate. Le pH se situe entre 9 et 11, les consommations d'ozone varient entre 0,8 et 3 moles d'oxydant/mole d'$H_2S$ (effets d'auto-décomposition et d'inhibiteurs de radicaux libres).

Pour les mercaptans, le pH doit être augmenté (ionisation maximale) et l'on doit tenir compte des effets de sel.

* eau oxygénée :

L'action de l'eau oxygénée sur les mercaptans et l'hydrogène sulfuré a fait l'objet de nombreuses publications, parmi lesquelles, les Brevets suivants : Brevet US 3,966,450 (O'NEIL et KIBBEL, 1976) ; Brevet US 4,151,260 (WOERTZ, 1979) ; Brevet DE 34 12581 A1 (MEHL, 1985).

Une étude effectuée par LE GOALLEC et al., 1990, montre une consommation globale de 12 moles d'$H_2O_2$/mole d'$H_2S$ détruit, alors que la consommation théorique est de 4 mole/mole et qu'en laboratoire, compte-tenu d'espèces intermédiaires moins oxydées formées, on ne consomme instantanément que 2 moles/mole. L'utilisation d'eau oxygénée pour épurer un milieu en $H_2S$ entraîne souvent la formation de fortes odeurs alliacées.

* chélate ferrique :

Les procédés qui mettent en oeuvre un chélate ferrique permettent d'obtenir directement du soufre élémentaire à partir des gaz acides, de telle sorte qu'il n'y a pas de pollution secondaire, éliminent de façon satisfaisante l'odeur de l'hydrogène sulfuré mais peuvent exiger des conditions contraignantes (pressions supérieures à l'atmosphérique, températures élevées).

Les méthodes de lavage précitées ont l'inconvénient majeur de produire des produits de substitution eux-mêmes polluants (certains sels, oxydants).

B. $SO_2$ :

Les solutions actuellement adoptées dans l'industrie se rangent dans les catégories suivantes :

- réduction des émissions de $SO_2$ à la source :

. par modification des procédés utilisés, notamment incinération (catalyse humide sur charbon actif, traitement du combustible),

. par injection de désulfurant dans le foyer,

. par traitement des fumées :

$\rightarrow$ lavage des gaz à la chaux hydratée,

$\rightarrow$ procédé semi-sec (atomisation d'un lait de chaux),

$\rightarrow$ procédé sec (injection de chaux pulvérulente),

- captage du $SO_2$ par de la soude.

Les méthodes d'épuration de $SO_2$ ont, en particulier, l'inconvénient d'entraîner la formation de produits pouvant conduire à une acidification néfaste de l'environnement.

La présente invention s'est donné pour but de pourvoir à un procédé d'épuration d'effluents gazeux ou liquides contenant un ou plusieurs dérivés soufrés, tels que $H_2S$, mercaptans ou $SO_2$, qui élimine les inconvénients des solutions visant au même but proposées dans l'Art antérieur, notamment en ce que le procédé selon la présente invention permet un rendement quantitatif de l'ordre de 100 %, ne nécessite pas une installation particulière (utilisation possible de n'importe quelle colonne de lavage de gaz, par exemple), et fournit un produit de substitution stable, biodégradable et non toxique.

La présente invention a pour objet un procédé d'épuration d'effluents (gazeux ou liquides) contenant des dérivés soufrés ($H_2S$, alcoylmercaptans, $SO_2$), caractérisé en ce qu'il comprend :

(i) l'alcalinisation de l'effluent à traiter à un pH > 9 en présence d'une base de formule générale M-OH, dans laquelle M représente un métal alcalin, un métal alcalino-terreux, un agent de condensation entre la partie organique du composé de formule I ci-après et le dérivé soufré ou un agent de transfert de phase et notamment un ammonium quaternaire ou un ligand ;

(ii) la mise en contact du produit obtenu en (i) avec un composé de formule générale I :

$$X\text{-}(CH_2)_n\text{-}CO\text{-}R,$$

dans laquelle :

X représente :

. un halogène,

. un halogénure de sulfonyle de formule $X'\text{-}SO_2\text{-}R'$, dans laquelle X' représente un halogène, et R' représente un groupe alkyle en $C_1\text{-}C_{20}$ ou un groupe aryle éventuellement substitué,

. un groupe OH.

R représente :

. un alcoxy en $C_1\text{-}C_{16}$,

. un groupe NH-R", dans lequel R" représente un atome d'hydrogène ou un radical aminique primaire ou secondaire,

. un groupe $OR_2$ dans lequel $R_2$ représente un atome d'hydrogène, un métal alcalin, un métal alcalino-terreux ou un groupe ammonium, ou

. un halogène.

n est un nombre compris entre 1 et 4,

à une température comprise entre 12°C et 95°C et à pression atmosphérique.

Le principe de la réaction chimique peut être, dans le cas où R représente $OR_2$, schématisé comme suit :

- cas d'un mercaptan (réaction a) :

$$R_1\text{-}SH + X\text{-}(CH_2)_n\text{-}COOR_2 + M\text{-}OH \rightarrow R_1\text{-}S\text{-}(CH_2)_n\text{-}COOR_2 + MX + H_2O.$$

- cas de l'hydrogène sulfuré (réaction b) :

$$H_2S + 2\ X\text{-}(CH_2)_n\text{-}COOR_2 + 2\ M\text{-}OH \rightarrow S\text{-}(CH_2\text{-}COOR_2)_2 + 2\ MX.$$

- cas de l'anhydride sulfureux (réaction c) :

$$SO_2 + X\text{-}(CH_2)_n\text{-}COOR_2 + 2\ M\text{-}OH \rightarrow MSO_3\text{-}(CH_2)_n\text{-}COOR_2 + MX + H_2O.$$

. $R_1$ représente des radicaux hydrocarbonés $C_nH_m$ tels que méthyl, éthyl, butyle, etc...,
. X et $R_2$ ont la même signification que ci-dessus.

Selon un mode de mise en oeuvre avantageux dudit procédé, les étapes (i) et (ii) sont réalisées simultanément.

Selon un autre mode de mise en oeuvre avantageux dudit procédé, dans le composé de formule I, X représente du chlore, R représente un groupe $OR_2$ et n représente 1.

Selon une disposition préférée de ce mode de réalisation, $OR_2$ est un groupe ONa.

On obtient alors, comme produit de formule I, du monochloracétate de sodium.

Dans le cas où M = Na ; X = Cl ; $R_2$ = Na, les réactions a, b, c, ci-dessus deviennent :

- mercaptan :

$$R_1\text{-}SH + Cl\text{-}(CH_2)_n\text{-}COONa + NaOH \rightarrow R_1\text{-}S\text{-}(CH_2)_n\text{-}COONa + NaCl + H_2O$$

- $H_2S$ :

$$H_2S + 2(Cl\text{-}(CH_2)_n\text{-}COONa) + 2NaOH \rightarrow S((CH_2)_n\text{-}COONa)_2 + 2H_2O + 2\ NaC$$

- $SO_2$ :

$$SO_2 + 2\ NaOH + Cl\text{-}(CH_2)_n\text{-}COONa \rightarrow NaSO_3\text{-}(CH_2)_n\text{-}COONa + H_2O + NaCl.$$

Ce procédé de captage et de dépollution d'effluents gazeux ou liquide soufrés s'applique également au traitement simultané de plusieurs dérivés soufrés, éventuellement associés à des gaz acides.

Le procédé conforme à l'invention ne nécessite pas d'équipement spécifique.

Habituellement, on utilise des laveurs en série ; le traitement d'un mélange de polluants se fait en 2 ou 3 étages en série. Le plus souvent un étage de traitement acide pour l'élimination des composés azotés, suivi d'un étage de traitement basique oxydant ou de traitement oxydant suivi d'un traitement basique.

Le nombre d'étage de lavages ou le type de la colonne sera déterminé en conséquence.

Le procédé conforme à l'invention permet d'obtenir un produit traité liquide absolument inodore et incolore qui peut être directement évacué vers un bassin d'auto-neutralisation d'une station d'épuration ; de plus, l'acidification ne régénère pas de mercaptans ou d'hydrogène sulfuré.

Le traitement biologique en station d'épuration ne crée pas non plus de nouvelles nuisances, ni au niveau du réseau d'assainissement, ni au niveau de la station elle-même. Les mesures DBO (Demande Biologique en Oxygène) et DCO (Demande Chimique en Oxygène) sont améliorées comparativement aux procédés de destruction oxydants classiques.

Outre les dispositions qui précèdent, l'invention comprend encore d'autres dispositions, qui ressortiront de la description qui va suivre, qui se réfère à des exemples de mise en oeuvre du procédé objet de la présente invention.

Il doit être bien entendu, toutefois, que ces exemples sont donnés uniquement à titre d'illustration de l'objet de l'invention, dont ils ne constituent en aucune manière une limitation.

### EXEMPLE 1 : Captage et destruction de méthylmercaptan pur.

Une colonne d'abattage (hauteur 2 m, section 180) remplie d'anneaux Raschig est alimentée à contre-courant par une solution constituée de :

- eau : 400 litres,
- lessive de soude 40 % : 40 litres (d= 1,33),
- monochloracétate de sodium : 45 kg.

Sur une durée de 2 h, 16,5 kg de méthylmercaptan, issu d'une réaction chimique, ont été captés sur la colonne à une température comprise entre 12 et 35°C. En fin de captage, le réacteur de production et la colonne sont purgés à l'azote (débit de 200 l/h) pendant 10 h.

**EXEMPLE 2 : Captage et destruction de méthylmercaptan dilué par de l'azote.**

On utilise les mêmes quantités de réactifs que dans l'exemple 1. Le méthylmercaptan est capté en 6 h sous courant d'azote à un débit de 3 000 l/h, dans les mêmes conditions que celles de l'exemple 1 (température, pression). Le débit des gaz est :

azote :        3 000 l/h (86 %)
$CH_3SH$ :     460 l/h (13 %).

Puis l'appareillage est purgé à l'azote pendant 8 h (débit de 200 l/h).

**EXEMPLE 3 : Captage et destruction d'hydrogène sulfuré pur.**

La même colonne que dans l'exemple 1 est alimentée par une solution constituée de :

- eau : 450 litres,
- lessive de soude 40 % : 80 litres,
- monochloracétate de sodium : 85 kg.

Pendant une durée de 5 h, 5,88 kg d'hydrogène sulfuré, issu d'une réaction chimique, ont été captés entre 18 et 25°C, puis l'appareillage est purgé à l'azote (débit de 200 l/h) pendant 12 heures.

Les effluents liquides obtenus dans les exemples 1-3 (produits de substitution) sont parfaitement inodores et confirment le rendement de 100 % du procédé conforme à l'invention. Les produits de substitution des exemples 1-2 ont été réunis puis évacués vers un bassin d'auto-neutralisation d'une station d'épuration. Ils ont ensuite été soumis à un traitement bactériologique dans cette station. Un suivi quotidien par échantillonnage a été effectué sur 10 jours au niveau du bassin d'aération biologique ; on note l'absence d'émissions de sulfures volatils.

**EXEMPLE 4 : Captage et destruction de méthyl mercaptan en récipient ouvert agité.**

Dans un premier erlenmeyer de 250 ml, muni d'une agitation magnétique, on prépare une solution de 100 ml d'eau additionnée de 9 g (0,225 mole) de soude pure en écailles, puis on introduit 25 g (0,215 mole) de monochloracétate de sodium. Sur ce milieu réactionnel, on fait barboter en 30 min, par un tube plongeant, 10 g (0,208 mole) de méthylmercaptan.

En fin de réaction, le milieu réactionnel est inodore, par production d'un produit de substitution du type $R_1$-S-$(CH_2)_n$-$COOR_2$.

**EXEMPLE 5 : Destruction de méthylmercaptate de sodium en solution aqueuse alcaline.**

Dans un erlenmeyer de 250 ml muni d'une agitation magnétique, on prépare une solution de 100 ml d'eau additionnée de 9 g (0,225 mole) de soude pure en écailles, puis on fait barboter 10 g de méthylmercaptan (0,208 mole). Sur ce milieu réactionnel, on introduit 25 g (0,215 mole) de monochloracétate de sodium en quelques minutes.

En fin d'addition, le milieu réactionnel est inodore.

**EXEMPLE 6 : Destruction d'hydrogène sulfuré capté en solution aqueuse alcaline.**

Dans un erlenmeyer de 250 ml muni d'une agitation magnétique, on a préparé une solution de 18 g de soude en écailles (0,45 mole) dans 100 ml d'eau. Dans cette solution, on fait barboter, par un tube plongeant, 7 g (0,208 mole) d'hydrogène sulfuré.

Sur cette solution de sulfure de sodium, on ajoute en une seule fois 50 g de monochloracétate de sodium (0,43 mole). La température passe très rapidement de 35 à 80°C.

En fin d'addition, le milieu réactionnel est inodore.

**EXEMPLE 7 : Captage et destruction d'un mélange méthylmercaptan-hydrogène sulfuré dilué dans l'air.**

Dans une tour de lavage (h = 2 m, diamètre = 150) alimentée par une solution de 80 l d'eau contenant 2 l de lessive de soude et 0,8 kg de monochloracétate de soude avec un débit de 500 l/h, on fait passer à contre-courant un flux d'air d'un débit de 45 $m^3$/h contenant 20 mg $H_2S$ et 10 mg $CH_3SH$ par $m^3$.

Après 2 h d'épuration, conformément au procédé selon l'invention, la solution obtenue est inodore.

### EXEMPLE 8 : Captage et destruction de $SO_2$ dilué dans l'air.

On utilise la même tour de lavage que celle de l'exemple 7, alimentée par une solution de 70 l d'eau contenant 2 l de lessive de soude et 1 kg de monochloracétate de soude avec un débit de 500 l/h. On fait passer à contre-courant un flux d'air de 45 m$^3$/h contenant 1200 ppm de $SO_2$ sur une durée de 3 h. La solution obtenue est inodore.

### EXEMPLE 9 : Captage et destruction de $SO_2$ pur.

Dans un erlenmeyer de 250 ml, muni d'une agitation magnétique, contenant une solution constituée de 6,4 g de $SO_2$ dans 100 ml d'eau et 25 ml de lessive de soude 40 %, on introduit, en une seule portion, 35 g de monochloracétate de soude. La température passe très rapidement de 20 à 40°C.

En fin d'addition, le milieu réactionnel est inodore. De plus, on n'observe aucune émission de $SO_2$ par acidification de l'échantillon.

Dans l'ensemble des réactions (exemples 1 à 9), on obtient un rendement quantitatif de 100 % (élimination complète des effluents).

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s écarter du cadre, ni de la portée, de la présente invention.

## Revendications

1.  Procédé d'épuration d'effluents gazeux ou liquides contenant un dérivé soufré, caractérisé en ce qu'il comprend :

    (i) l'alcalinisation de l'effluent à traiter à un pH > 9 en présence d'une base de formule générale M-OH, dans laquelle M représente un métal alcalin, un métal alcalino-terreux, un agent de condensation entre la partie organique du composé de formule I ci-après et le dérivé soufré ou un agent de transfert de phase et notamment un ammonium quaternaire ou un ligand ;
    (ii) la mise en contact du produit obtenu en (i) avec un composé de formule générale I : $X-(CH_2)_n-CO-R$, dans laquelle :

    X       représente :

    .    un halogène,
    .    un halogénure de sulfonyle de formule $X'-SO_2-R'$, dans laquelle X' représente un halogène, et R' représente un groupe alkyle en $C_1-C_{20}$ ou un groupe aryle éventuellement substitué,
    .    un groupe OH.

    R       représente :

    .    un alcoxy en $C_1-C_{16}$,
    .    un groupe NH-R", dans lequel R" représente un atome d'hydrogène ou un radical aminique primaire ou secondaire,
    .    un groupe $OR_2$ dans lequel $R_2$ représente un atome d'hydrogène, un métal alcalin, un métal alcalino-terreux ou un groupe ammonium, ou
    .    un halogène.

    n       est un nombre compris entre 1 et 4, à une température comprise entre 12°C et 95°C et à pression atmosphérique.

2.  Procédé d'épuration d'effluents selon la revendication 1, caractérisé en ce que les étapes (i) et (ii) sont réalisées simultanément.

3.  Procédé d'épuration d'effluents selon la revendication 1 ou la revendication 2, caractérisé en ce que dans le composé de formule I, X représente du chlore, R représente un groupe $OR_2$ et n représente 1.

4.  Procédé d'épuration d'effluents selon la revendication 3, caractérisé en ce que $OR_2$ est un groupe ONa.

Office européen
des brevets

**RAPPORT DE RECHERCHE EUROPEENNE**

Numero de la demande

EP 95 40 0479

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-31 35 039 (HEINZ HÖLTER) <br> * abrégé * <br> * page 8, alinéa 3 * <br> --- | 1 | B01D53/48 <br> B01D53/50 <br> B01D53/52 |
| A | EP-A-0 125 358 (EXXON RESEARCH AND ENGINEERING COMPANY) <br> * page 8, ligne 27 - ligne 31; revendication 1 * <br> --- | 1 | |
| A | EP-A-0 216 388 (LINDE) <br> * revendications * <br> --- | 1 | |
| A | US-A-4 844 874 (QUAD ENVIRONMENTAL TECHNOLOGIES) <br> * revendications * <br> ----- | 1 | |

**DOMAINES TECHNIQUES RECHERCHES (Int.Cl.6)**

B01D

Le présent rapport a été établi pour toutes les revendications

| Lieu de la recherche | Date d'achèvement de la recherche | Examinateur |
|---|---|---|
| LA HAYE | 3 Août 1995 | Bogaerts, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)